# DEMANDE DE BREVET EUROPEEN

(11) **EP 1 715 554 A2**
(43) Date de publication de la demande: **25.10.2006**
(21) Numéro de dépôt: 06352011.8
(22) Date de dépôt: 19.04.2006
(51) Int. Cl.: H02G 1/08

(54) **Procédé, et dispositif portatif, pour le pré-filage d'une gaine**

(30) Priorité: 19.04.2005 FR 0503874
(71) Demandeur: Prefilec, 31100 Toulouse (FR)
(72) Inventeur: Goubert, Pascal, 31100 Toulouse (FR); Moreux, Vincent, 31100 Toulouse (FR)
(74) Mandataire: Morelle, Guy Georges Alain

(57) **Abrégé**

Procédé permettant un passage d'au moins un fil ou câble (2), de type fil électrique ou câble électrique ou analogue, dans une gaine (3) munie d'un tire-fil (4), comprenant au moins les étapes suivantes :
- étendre sur le sol la gaine traversée par son tire-fil, en position déroulée,
- attacher une extrémité du tire-fil sur un support rotatif (5) fixe par rapport au sol (20),
- attacher ledit au moins un fil ou câble, à l'autre extrémité du tire-fil,
- maintenir fixe par rapport au sol l'extrémité de la gaine du côté de l'extrémité du tire-fil où est attaché ledit au moins un fil ou câble,
- commander la rotation du support rotatif afin de provoquer l'enroulement du tire-fil sur celui-ci et le passage dudit au moins un fil ou câble dans la gaine.

Dispositif portatif (1) d'assistance pour le passage d'au moins un fil ou câble (2), de type fil électrique ou câble électrique ou analogue, dans une gaine (3), par exemple une gaine munie d'un tire-fil (4), comprenant :
- un support rotatif (5) sur lequel le tire-fil et la gaine sont aptes à être enroulés,
- un socle portatif (6) soutenant le support rotatif par l'intermédiaire d'une liaison à un degré de liberté en rotation au moins,
- des moyens d'entraînement en rotation (7) du support rotatif.

## Description

La présente invention se rapporte aux procédés et aux dispositifs permettant un passage d'au moins un fil ou câble, de type fil électrique ou câble électrique ou analogue, dans une gaine munie d'un tire-fil.

Dans le cadre de travaux d'installation électrique, il existe une activité qui consiste à "tirer des lignes" de fils ou de câbles, c'est à dire faire passer dans des gaines ces fils ou câbles électriques, qui occupe une partie prépondérante du temps d'intervention d'un l'électricien professionnel. Le coût des gaines pré-filées avant leurs poses sur chantier, c'est à dire contenant un ensemble standard de fils électriques, est élevé, et les professionnels, notamment les électriciens indépendants, préfèrent généralement procéder de la manière suivante :
- tout d'abord, la ou les gaines sont installées sans les fils électriques, la gaine contenant alors uniquement un fil métallique entraîneur, appelé tire-fil, destiné à faire passer les câbles ou fils électriques dans la gaine par traction sur celui-ci,
- dans un second temps, les fils électriques adaptés accrochés à une extrémité du tire-fil, puis sont tirés à travers la gaine par entraînement via le tire-fil sur lequel une traction est exercée.

Cette opération consistant à tirer les fils est longue et fastidieuse : le filage doit être effectué sur des distances souvent importantes, et dans des conditions difficiles propres à tout chantier, comme des endroits difficiles d'accés, des problèmes dus à des écrasements de gaine lors de leurs installations, venant gêner, ralentir, ou empêcher la progression des fils dans les gaines, etc...

Dans certaines circonstances, par exemple pour respecter des délais d'interventions très courts, le professionnel peut privilégier le gain de temps à la méthode classique consistant à tirer les fils : il achètera alors à l'avance de la gaine pré-filée en usine. Ses coûts seront ainsi plus importants que lorsqu'il achète fil et gaine séparément. De plus, seules des gaines comportant des jeux de fils standards, c'est à dire adaptés aux prises de courant et aux points lumineux essentiellement, sont disponibles sur le marché, pré-filées en usine. Il sera donc tout de même nécessaire de tirer les fils ne correspondant pas à ces jeux standards. La problématique exposée ci-dessus pour la pose de fils électriques, est similaire pour la pose de câbles électriques, ainsi que pour les câbles de téléphone et les fils d'antennes de télévision.

La présente invention propose de pallier ces inconvénients. Plus précisément, elle consiste en un procédé permettant un passage d'au moins un fil ou câble, de type fil électrique ou câble électrique ou analogue, dans une gaine munie d'un tire-fil, caractérisé en ce qu'il comprend au moins les étapes suivantes :
- étendre sur le sol la gaine traversée par son tire-fil, en position déroulée,
- attacher une extrémité du tire-fil sur un support rotatif fixe par rapport au sol,
- attacher ledit au moins un fil ou câble, à l'autre extrémité du tire-fil,
- maintenir fixe par rapport au sol l'extrémité de la gaine du côté de l'extrémité du tire-fil où est attaché ledit au moins un fil ou câble,
- commander la rotation du support rotatif afin de provoquer l'enroulement du tire-fil sur celui-ci et le passage dudit au moins un fil ou câble dans la gaine.

Le procédé selon l'invention permet à un professionnel d'introduire les câbles ou fils dans une gaine, par exemple sur chantier, avant la mise en place de la gaine à son emplacement définitif. Ainsi, le professionnel peut avantageusement maîtriser ses coûts car il n'est plus nécessaire pour lui d'acheter de la gaine pré-filée ; il peut en outre gagner du temps en tirant les fils à un endroit choisi de manière appropriée qui offre toute la place disponible pour cette opération, par exemple en atelier ou en plein air, et évite ainsi d'avoir à tirer des fils dans des positions inconfortables ou dans des gaines dont le trajet n'est pas particulièrement adapté à cette opération de tirage.

Selon une caractéristique avantageuse, le procédé selon l'invention comprend en outre au moins l'étape suivante :
- placer le tire-fil dans un guide avant de commander la rotation du support rotatif en vue de provoquer l'enroulement du tire-fil sur le support rotatif.

Cette caractéristique permet de guider l'enroulement du fil sur le support rotatif pour une optimisation de l'opération d'enroulement.

Selon une caractéristique avantageuse, le procédé selon l'invention comprend en outre au moins les étapes suivantes :
- libérer l'extrémité de la gaine, maintenue fixe par rapport au sol,
- commander la rotation du support rotatif afin de provoquer l'enroulement de la gaine sur celui-ci après que ledit au moins un fil ou câble soit passé dans la gaine,
- retirer la gaine enroulée du support rotatif.

Cette caractéristique permet au professionnel d'obtenir un rouleau de gaine pré-filée facilement transportable, l'opération d'enroulement de la gaine pouvant être effectuée à la suite de l'opération consistant à passer les fils dans la gaine.

Selon une caractéristique avantageuse, le procédé selon l'invention comprend en outre au moins les étapes suivantes :
- sectionner le tire-fil une fois ledit au moins un fil ou câble passé dans la gaine,
- attacher une extrémité de la gaine au support rotatif après que ledit au moins un fil ou câble soit passé dans celle-ci, en vue d'un enroulement de la gaine sur le support rotatif.

Selon une caractéristique avantageuse, la commande de la rotation du support rotatif est réalisée au moyen d'une commande à distance.

La commande à distance de la rotation du support rotatif permet avantageusement à un professionnel d'améliorer la rapidité de l'exécution du procédé, en ce que celui-ci peut se tenir à l'extrémité de la gaine du côté de l'extrémité du tire-fil où est attaché ledit au moins un fil ou câble, qui est éloignée du support rotatif, maintenir cette extrémité fixe par rapport au sol, puis actionner à distance l'enroulement du tire-fil à partir de cette position. Ainsi, la commande à distance peut éviter au professionnel soit d'avoir à fixer l'extrémité visée de la gaine de façon à ce qu'elle soit fixe sans l'aide d'un opérateur, soit de parcourir inutilement la distance entre cette extrémité et le support rotatif si la commande de la rotation du support rotatif était placée sur le support lui-même.

L'invention se rapporte également à un dispositif portatif d'assistance pour le passage d'au moins un fil ou câble, de type fil électrique ou câble électrique ou analogue, dans une gaine, par exemple une gaine munie d'un tire-fil, caractérisé en ce qu'il comprend :
- un support rotatif sur lequel le tire-fil et la gaine sont aptes à être enroulés,
- un socle portatif soutenant le support rotatif par l'intermédiaire d'une liaison à un degré de liberté en rotation au moins,
- des moyens d'entraînement en rotation du support rotatif.

Le dispositif selon l'invention, qui permet la mise en ouvre d'un procédé selon l'invention, permet grâce à son support portatif et à ses moyens d'entraînement en rotation du support rotatif, de fournir à un professionnel un outil de travail lui permettant de passer des fils ou câbles dans une gaine en tout lieu approprié, lui évitant ainsi la nécessité d'approvisionner des gaines pré-filées, notamment en cas d'intervention en urgence, le professionnel pouvant alors pré-filer lui-même les gaines nécessaires, dans des délais maîtrisés et coûts réduits, du fait de la machine qu'il a à sa disposition, soit en atelier, soit sur chantier avant mise en place de ces gaines.

Selon une caractéristique avantageuse, le dispositif selon l'invention comprend en outre des moyens de guidage du tire-fil.

Les moyens de guidage permettent avantageusement en premier lieu de guider l'enroulement du tire-fil sur le support rotatif afin de coordonner l'enroulement des spires, mais peuvent permettre en outre, en coopération avec d'autres éléments avantageux, d'autres fonctions, comme la coupure automatique des moyens d'entraînement en rotation du support rotatif lorsque le tire-fil a terminé son enroulement, ou l'optimisation de l'enroulement par des moyens de mobilité du guide-fil, associés à ce dernier.

Selon une caractéristique avantageuse, ledit support rotatif comprend :
- un moyeu, autour duquel le tire-fil et/ou la gaine sont aptes à être enroulés,
- un premier et un deuxième flasques latéraux, solidaires du moyeu et destinés à permettre un enroulement en couches superposées du tire-fil et/ou de la gaine,
- un au moins desdits premier et deuxième flasques latéraux étant lié au moyeu par une liaison démontable, afin de permettre un retrait du tire-fil et/ou de la gaine enroulés sur le moyeu selon une direction parallèle à l'axe de rotation du support rotatif.

Le flasque démontable permet avantageusement un retrait de la gaine une fois celle-ci pré-filée et enroulée autour du moyeu.

Selon une caractéristique avantageuse, ledit socle portatif adopte une forme de U, la base du U étant destinée à reposer sur le sol, et les extrémités supérieures des branches du U supportant la liaison à un degré de liberté en rotation avec le support rotatif.

Selon une caractéristique avantageuse, les moyens d'entraînement en rotation du support rotatif comprennent :
- un moteur électrique fixé au socle portatif et comportant un arbre moteur,
- des moyens d'entraînement en rotation par friction du support rotatif, liés à l'arbre moteur du moteur électrique.

Selon une caractéristique avantageuse, l'arbre moteur du moteur électrique comporte un axe de rotation parallèle à l'axe de rotation du support rotatif, et les moyens d'entraînement en rotation par friction du support rotatif comportent un rouleau en prise par adhérence sur l'un au moins des premier et deuxième flasques latéraux.

Selon une caractéristique avantageuse, les moyens d'entraînement en rotation du support rotatif comprennent des moyens de commande à distance du moteur électrique.

Les moyens de commande à distance du moteur électrique d'entraînement du support rotatif permettent avantageusement à un professionnel d'améliorer la rapidité de l'opération de pré-filage de la gaine, en ce que celui-ci peut se tenir à l'extrémité de la gaine opposée à celle proche du dispositif en vue de la maintenir au sol, et actionner l'enroulement du tire-fil à partir de cette position.

Selon une caractéristique avantageuse, les moyens de guidage du tire-fil comprennent une patte fixée sur le socle portatif, comportant une encoche dans laquelle le tire-fil est destiné à passer, ladite encoche étant mobile suivant l'axe de rotation du support rotatif.

La mobilité de l'encoche permet avantageusement de répartir régulièrement l'enroulement du tire-fil sur le moyeu et éventuellement celle de la gaine pré-filée.

Selon une caractéristique avantageuse, le dispositif selon l'invention comporte des moyens de sectionnement du tire-fil, aptes à agir lorsque ledit au moins un fil ou câble est passé dans la gaine.

Le sectionnement du tire-fil une fois les fils passés dans la gaine permet de dissocier le tire-fil devenu inutile de la gaine pré-filée, qui peut ensuite être enroulée autour du support rotatif en vue de son transport ou stockage.

Selon une caractéristique avantageuse, les moyens de sectionnement du tire-fil sont portés par les moyens de guidage du tire-fil.

D'autres caractéristiques et avantages apparaîtront à la lecture qui suit des exemples de mode de réalisation d'un dispositif et d'un procédé selon l'invention, accompagnée des dessins annexés, exemples donnés à titre illustratif non limitatif.

La figure 1 représente une vue schématique en perspective d'un premier exemple de mode de réalisation d'un dispositif portatif d'assistance pour le passage d'au moins un fil ou câble, de type fil électrique ou câble électrique ou analogue, dans une gaine munie d'un tire-fil.

La figure 2 représente de manière schématique une étape d'un exemple de mode de réalisation d'un procédé selon l'invention, permettant un passage d'au moins un fil ou câble, de type fil électrique ou câble électrique ou analogue, dans une gaine munie d'un tire-fil.

La figure 3 représente de manière schématique une autre étape de l'exemple de procédé selon la figure 2.

La figure 4 représente de manière schématique une autre étape de l'exemple de procédé selon la figure 2.

La figure 5 représente une vue schématique en perspective d'un deuxième exemple de mode de réalisation d'un dispositif portatif d'assistance pour le passage d'au moins un fil ou câble, de type fil électrique ou câble électrique ou analogue, dans une gaine munie d'un tire-fil.

La figure 6 représente une vue de dessus de l'exemple de la figure 5.

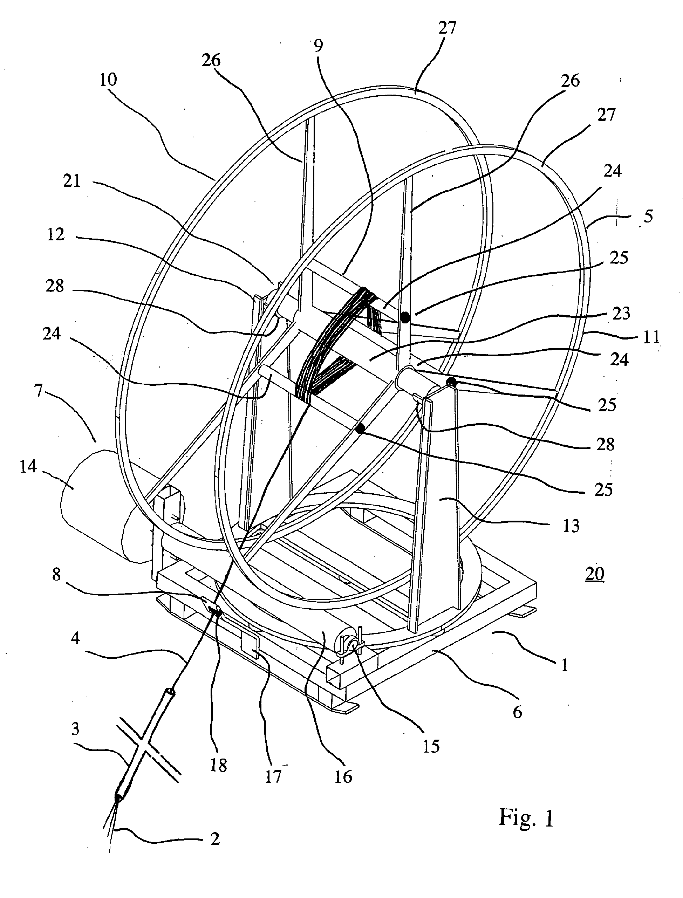

Le premier exemple de dispositif représenté sur la figure 1, est un dispositif portatif 1 d'assistance pour le passage d'un ou plusieurs fils ou câbles 2, de type fils électriques ou câbles électriques ou analogue, par exemple câbles de téléphone, fils d'antenne de télévision, etc... dans une gaine 3 munie d'un tire-fil 4, et comprend :
- un support rotatif 5 sur lequel le tire-fil 4 et la gaine 3 sont aptes à être enroulés,
- un socle portatif 6 soutenant le support rotatif 5 par l'intermédiaire d'une liaison 21 à un degré de liberté en rotation au moins,
- des moyens d'entraînement en rotation 7 du support rotatif,
- avantageusement des moyens de guidage 8 du tire-fil 4.

Le support rotatif comprend par exemple :
- un moyeu 9, autour duquel le tire-fil 4 et la gaine 3 sont aptes à être enroulés,
- un premier 10 et un deuxième 11 flasques latéraux, solidaires du moyeu et destinés à permettre un enroulement en couches superposées du tire-fil ou de la gaine,
- un 11 au moins des premier 10 et deuxième 11 flasques latéraux étant lié au moyeu 9 par une liaison démontable, afin de permettre un retrait du tire-fil ou de la gaine enroulés sur le moyeu selon une direction parallèle à l'axe de rotation du support rotatif.

Le moyeu 9 peut être constitué d'un arbre 23 et de trois entretoises 24 parallèles à l'arbre 23 définissant un triangle d'enroulement du tire-fil 4 et de la gaine 3. Comme représenté sur la figure 1, les entretoises 24 peuvent être fixées par leurs extrémités sur les flasques 10 et 11 respectivement, par une fixation démontable sur un des flasques, par exemple le flasque 11 aux moyens de vis, papillons, clips ou analogue, de préférence une fixation à démontage rapide comme le clip. L'arbre 23 adoptera par exemple la forme d'un arbre plein ou tubulaire aux extrémités duquel se trouvent les liaisons 21 au socle portatif 6 sous la forme de paliers lisses ou de paliers à roulement. Un des flasques 10 et 11, le 10 sur la figure 1, vient de préférence se fixer sur l'arbre 23 par exemple, et une extrémité des entretoises 24 est fixée sur le flasque 10, l'autre flasque 11 démontable étant fixé de manière démontable sur l'autre extrémité des entretoises 24. Les flasques 10 et 11 peuvent adopter respectivement une forme de roue comportant un anneau circulaire 27 délimitant le diamètre d'enroulement maximal du support rotatif 5 et permettant avantageusement à ce dernier de pouvoir rouler sur le sol lorsqu'il n'est pas en place sur le socle portatif 6. L'anneau circulaire 27 est relié au moyeu par l'intermédiaire de trois branches radiales 26 pour chaque flasque 10, 11, une extrémité des branches 26 étant fixée à l'anneau 27 et l'autre au moyeu 9. Il est à noter que les entretoises 24 seront de préférence fixées sur les branches radiales 26 des flasques par l'intermédiaire d'une fixation réglable en vue de permettre une modification du diamètre intérieur d'enroulement de la gaine 3, entraînant ainsi une modification de la capacité de longueur de gaine enroulée pour un diamètre donné de flasque. A cet effet, les entretoises 24 pourront être liées aux branches 26 via une liaison à un degré de liberté en translation de type glissière, suivant une partie de la longueur des branches 26. Le professionnel pourra ainsi régler le diamètre d'enroulement de la gaine 3 en fonction de ses besoins et le diamètre d'enroulement du tire-fil 4 qui intervient dans la détermination de l'effort d'enroulement que doivent exercer les moyens d'entraînement en rotation 7 du support rotatif 5. Il y a lieu de noter que les entretoises peuvent être en nombre supérieur à trois en vue d'induire un effort d'enroulement plus régulier si nécessaire.

Le socle portatif 6 adopte avantageusement une forme de U, la base du U étant destinée à reposer sur le sol, et les extrémités supérieures 12, 13 des branches du U supportant la liaison 21 à un degré de liberté en rotation avec le support rotatif 5, plus précisément avec l'arbre 23 du support rotatif. Le socle portatif 6 peut être réalisé, comme le support rotatif 5, en matériau métallique mécano-soudé, en vue d'être suffisamment léger pour le caractère portatif de l'ensemble. Dans l'exemple représenté sur la figure 1, les extrémités de l'arbre 23 du support rotatif reposent respectivement sur deux cuvettes 28 en forme de demi-paliers sur lesquelles elles tournent; ainsi, le support rotatif 5 et le socle portatif 6 peuvent être rapidement dissociés l'un de l'autre pour le portage et le transport du dispositif. Une attache rapide (non représentée) peut en outre venir coiffer l'extrémité de l'arbre 23 en vue d'empêcher que ce dernier ne se dégage intempestivement de sa cuvette 28 lors de la rotation du support 5. La position des moyens de guidage 8 du tire-fil 4 peut avantageusement être mise à profit pour que l'effort d'enroulement vise en outre à plaquer le support rotatif 5 dans les cuvettes 28 du socle portatif 6. Les cuvettes 28 seront avantageusement réalisées à l'extrémité supérieure des branches du U en vue d'assurer de préférence l'horizontalité de l'axe de rotation du support rotatif 5. La base du U peut adopter toute forme appropriée selon les besoins, en tenant compte du fait que le dispositif doit être stable sous l'effort d'enroulement ou de traction des fils 3 à travers la gaine 3, c'est à dire qu'il ne doit pas pouvoir basculer sous l'effet de la résistance du tire-fil 4 tractant les fils ou câbles 2 à travers la gaine 3.

Les moyens d'entraînement 7 en rotation du support rotatif 5 comprennent avantageusement :
- un moteur électrique 14 fixé selon tous moyens connus, par exemple par vis, au socle portatif 6 et comportant un arbre moteur 15,
- des moyens d'entraînement en rotation par friction 16 du support rotatif 5, liés à l'arbre moteur 15 du moteur électrique 14.

Le moteur électrique 14 peut être de faible puissance, et comporte de préférence un axe de rotation parallèle à l'axe de rotation du support rotatif 5, et les moyens d'entraînement en rotation par friction du support rotatif comportent un rouleau 16 en prise par adhérence sur l'un au moins des premier 10 et deuxième 11 flasques latéraux, plus précisément dans le premier exemple représenté, en prise sur les anneaux 27 des deux flasques 10 et 11 du support rotatif 5 comme représenté sur la figure 1. La position du moteur 14 sur le socle portatif 6 sera déterminée de telle sorte que, en coopération avec la forme du socle et l'assise de celui-ci au sol, l'ensemble soit optimisé de manière à faire en sorte que la résistance due essentiellement au frottement des fils 2 dans la gaine 3, au couple d'enroulement, ne fasse pas basculer le dispositif. A titre d'exemple, le moteur 14 peut être fixé sur le socle portatif 6 en sorte que le rouleau d'entraînement du support rotatif 5 soit en prise en partie basse des anneaux 27, comme représenté sur la figure 1. Les branches du U du socle portatif 6 peuvent par exemple être inclinées (non représentées) pour déplacer le centre de gravité de manière appropriée par rapport à la base de sustentation du socle 6, en sorte que lorsque les fils 2 sont tractés dans la gaine 3, le centre de gravité de l'ensemble ne se déplace pas en dehors du polygone de sustentation défini par le socle. Il est à noter que les branches du U du socle 6 sont avantageusement fixes par rapport au sol, et donc fixées rigidement à la platine de base formant la base du U. De manière alternative, le support en U peut adopter une forme en L (non représentée) afin de dégager un côté du support rotatif 5 en vue d'améliorer l'accès au flasque démontable, et d'éviter de dissocier celui-ci du support portatif 6 pour dégager un rouleau de gaine ou le tire-fil 4. Le socle portatif peut comporter en outre des roulettes d'appui sur le sol (non représentées) dont la rotation peut être verrouillée, en vue de permettre un déplacement plus aisé du dispositif.

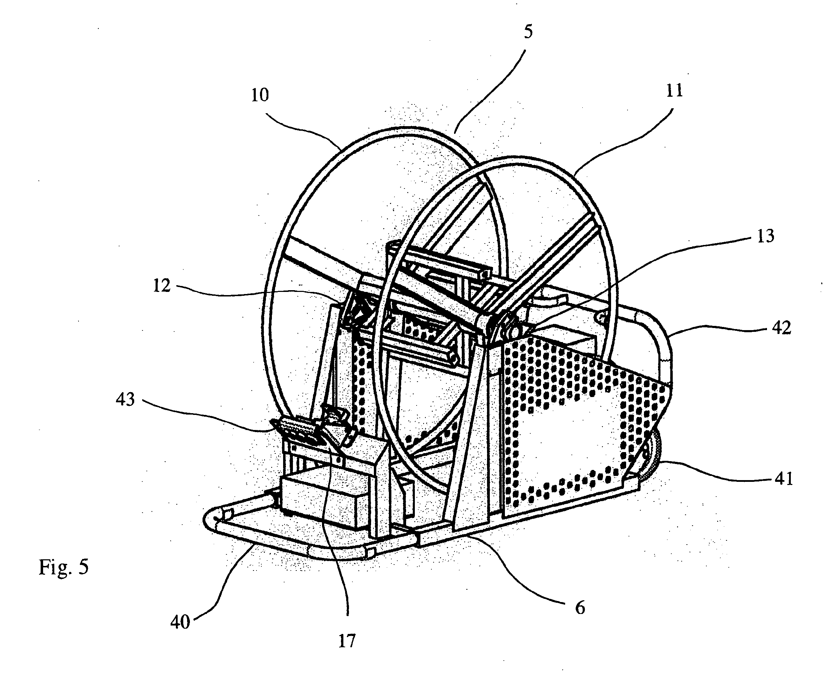

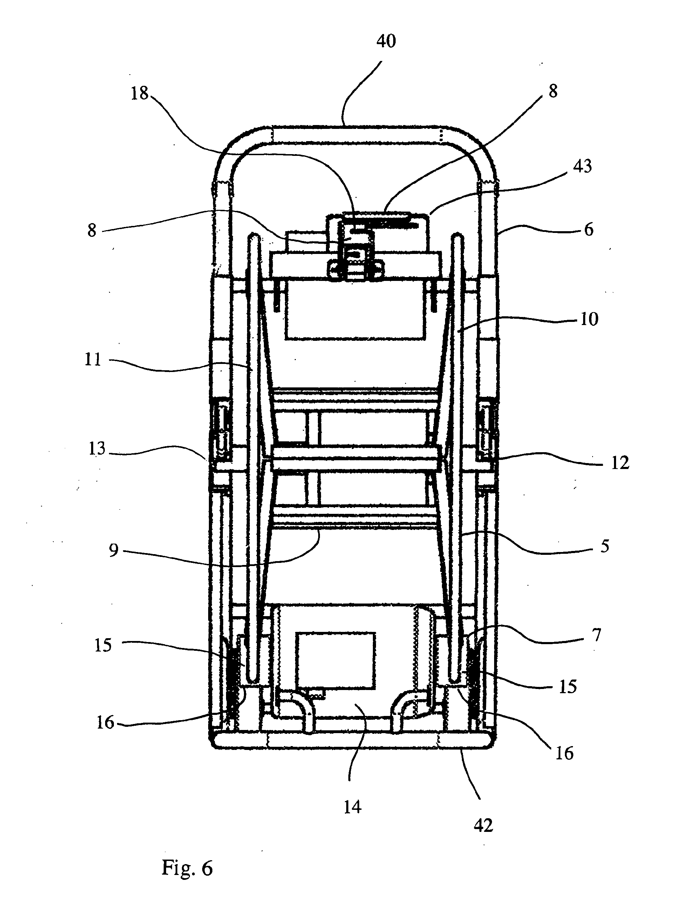

Le moteur représenté dans le premier exemple à une extrémité du rouleau 16 d'entraînement peut, de manière alternative, être positionné au centre par exemple, soit entre les deux flasques 10 et 11 comme représenté sur le deuxième exemple à l'aide des figures 5 et 6, en vue d'améliorer l'efficacité et la simplicité du dispositif. L'entraînement en rotation du support rotatif 5 par le moteur 14 par friction est direct dans l'exemple représenté, une démultiplication importante pouvant être adoptée par le rapport du diamètre du rouleau 16 d'entraînement au diamètre des flasques 10 et 11. Cependant, d'autres modes d'entraînement/démultiplication peuvent être adoptés, comme par exemple par crémaillère, chaîne, courroie, arbre, ou autre. Dans les exemples représentés, afin d'optimiser les performances en traction du dispositif, le matériau du rouleau 16 en contact avec les flasques 10 et 11, avantageusement de type caoutchouc, silicone, ou analogue, peut être monté sur un système de ressort, permettant ainsi une plus grande souplesse du système.

De manière avantageuse, les moyens d'entraînement en rotation 7 du support rotatif 5 comprennent des moyens de commandé à distance du moteur électrique.

Les moyens de guidage 8 du tire-fil 4 comprennent par exemple une patte 17 fixée sur le socle portatif 6, comportant une encoche 18 dans laquelle le tire-fil est destiné à passer, l'encoche 18 étant fixe dans l'exemple représenté et centrée entre les flasques 10 et 11 du support rotatif 5, mais pouvant de manière alternative être mobile suivant l'axe de rotation du support rotatif 5 afin de suivre l'enroulement du tire-fil 4 le long de l'axe de rotation du moyeu 9 en vue de répartir régulièrement le tire-fil 4 autour de ce moyeu.

De manière avantageuse, le dispositif pourra comporter des moyens de sectionnement du tire-fil 4, par exemple de type cisaille ou analogue (non représentés), aptes à agir lorsque les fils ou câbles 2 sont passés dans la gaine 3. Ces moyens de sectionnement du tire-fil 4 agiront par exemple de manière automatique lorsque les fils ou câbles 2 arrivent en butée contre la patte 17, par simple contact ou via un dispositif optique par exemple. A cet effet, les moyens de sectionnement du tire-fil 4 seront avantageusement portés par les moyens de guidage 8 du tire-fil.

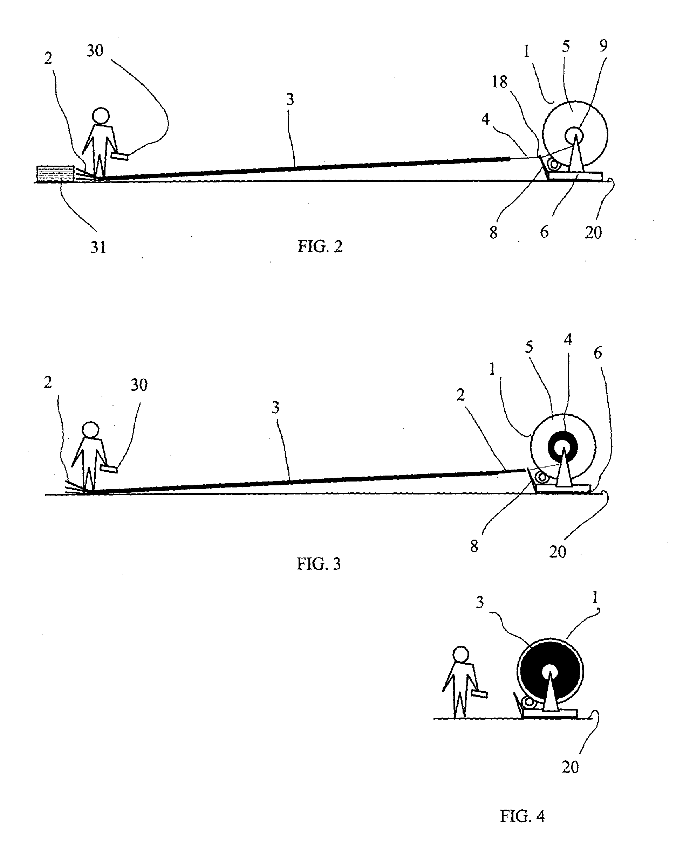

Un exemple de procédé selon l'invention, permettant un passage d'au moins un fil ou câble 2, de type fil électrique ou câble électrique ou analogue, dans une gaine 3 munie d'un tire-fil 4, va maintenant être décrit, avec l'aide des figures 2 à 4.

Le procédé donné en exemple, peut être mis en oeuvre au moyen des exemples de dispositif décrits plus haut et ci-après, et consiste à :
- étendre sur le sol 20 la gaine 3 traversée par son tire-fil 4, en position déroulée, comme représenté sur la figure 2,
- placer avantageusement le tire-fil 4 dans l'encoche 18 des moyens de guidage 8 du tire-fil 4,
- attacher une extrémité du tire-fil 4 de préférence sur le moyeu 9 du support rotatif 5 fixe par rapport au sol 20, par exemple sur une entretoise 24 (non représentée sur la figure 2) du moyeu,
- attacher les fils, câbles 2 ou analogue, à l'autre extrémité du tire-fil 4, où sont placées les bobines 31 de fils ou câbles ou analogue destinés à être introduits dans la gaine 3,
- maintenir fixe par rapport au sol l'extrémité de la gaine du côté de l'extrémité du tire-fil 4 où sont attachés les fils, câbles, 2 ou analogue, le professionnel pouvant réaliser cette étape par simple blocage de la gaine 3 avec ses mains ou ses pieds, ou encore par la fixation de la gaine 3 au sol 20 par tout moyen approprié selon le nombre de fils ou câbles à tracter et les efforts de frottement en résultant sur la gaine 3, comme représenté sur la figure 2,
- commander la rotation du support rotatif 5 afin de provoquer l'enroulement du tire-fil 4 sur celui-ci et le passage des fils ou câbles dans la gaine 3, cette opération pouvant être avantageusement effectuée par le professionnel à distance grâce à la télécommande 30,
- sectionner avantageusement le tire-fil 4, de préférence de manière automatique lorsque les fils ou câbles 2 entrent en contact avec la patte 17 des moyens de guidage du tire-fil 4, comme représenté sur la figure 3,
- stopper avantageusement la rotation du moteur 14, de préférence de manière automatique lorsque le tire-fil 4 a terminé son enroulement, cet arrêt moteur pouvant être par exemple commandé par l'entrée en contact des fils 2 sur les moyens de guidage 8 du tire-fil 4,
- libérer l'extrémité maintenue fixe par rapport au sol 20 de la gaine 3, une fois le tire-fil 4 enroulé sur le support rotatif 5 du dispositif 1, et les fils ou câbles 2 passés dans la gaine, comme représenté sur la figure 3,
- retirer de préférence le tire-fil 4 enroulé du support rotatif 5, par démontage du flasque latéral démontable,
- attacher avantageusement une extrémité de la gaine 3 au support rotatif 5, par exemple sur le moyeu 9, remonter le flasque démontable sur le support rotatif 5, en vue d'un enroulement de la gaine sur le support rotatif 5,
- commander la rotation du support rotatif 5 afin de provoquer l'enroulement de la gaine sur celui-ci, comme représenté sur la figure 4,
- retirer ensuite la gaine 3 enroulée du support rotatif 5, par démontage du flasque démontable.

Le deuxième exemple de mode de réalisation d'un dispositif selon l'invention est similaire au premier exemple, et se différencie de celui-ci par les caractéristiques suivantes, étant noté que les éléments des premier et deuxième exemples, suivant les figures 1, et 5, 6, qui exercent les mêmes fonctions portent les mêmes références numériques : dans le deuxième exemple,
- le socle 6 comporte une première poignée 40, par exemple tubulaire, s'étendant horizontalement de préférence sensiblement sous les moyens de guidage 8 du tire-fil, et en avant de ces derniers, et servant également d'appui au sol du socle 6 à l'avant du dispositif, en sorte de contrer le moment basculeur généré lors de la mise en marche de l'appareil,
- deux roues ou roulettes 41 sont disposées sur le socle 6, du côté opposé à la première poignée 40, soit à l'arrière du dispositif, en sorte de permettre de faire rouler le dispositif sur le sol, par exemple lorsqu'on soulève la poignée 40 représenté sur les figures 5 et 6, le dispsoitif reposant alors sur le sol via les roues ou roulettes,
- le socle 6 comporte en outre une deuxième poignée 42 opposée à la première 40, soit à l'arrière du dispositif, s'élevant par exemple sensiblement perpendiculairement au sol, au dessus des roues ou roulettes 41, et permettant de servir d'appui au dispositif lorsque celui-ci est redressé avec le support 6 à la verticale, ou de servir de poignée de transport ou de levage,
- le moteur 14 est disposé à l'arrière sur socle 6, du côté opposé aux moyens de guidage du tire-fil, soit proche des roues ou roulettes 41 en vue de diminuer le couple de levage du dispositif à partir de la poignée 40, entre les flasques 10 et 11, et l'arbre moteur 15 s'étend avantageusement axialement de part et d'autre du moteur 14 afin que chacune des extensions de l'arbre moteur soit en prise avec un flasque 10, 11 du support rotatif 5. Le moteur 14 à l'arrière, le diamètre d'enroulement du matériel filaire tiré à travers la gaine, et la position du moyen de guidage du tire-fil, seront avantageusement déterminés en sorte qu'une force proportionnelle à celle générée par la traction des fils dans la gaine, soit exercée sur les deux galets d'entraînement, au moyen d'une composante résultante des efforts exercés lors de l'enroulement du matériel filaire visant à augmenter la pression des galets sur les flasques lorsque l'effort de traction est lui-même augmenté.
- le dispositif comporte des moyens d'accrochage 43 pour l'extrémité de la gaine la plus proche du socle 6.

La poignée 40 augmente sensiblement la stabilité du dispositif selon l'invention, ainsi que son ergonomie permettant de fournir une poignée de tirage du dispositif sur le sol lorsqu'il est équipé des roues ou roulettes 41. Les deux roues ou roulettes 41 peuvent être disposées de chaque coté latéral du socle, par exemple sensiblement dans le même plan que les deux flasques 10 et 11 respectivement, et peuvent par exemple affleurer le sol lorsque le socle 6 est en appui stable sur ce dernier, en sorte de constituer un appui roulant du dispositif lorsque la poignée 40 est relevée par un opérateur. Ainsi muni de roues ou roulettes, le socle 6 peut rester portatif, ainsi que le dispositif, mais est apte à rouler sur le sol limitant ou évitant ainsi le portage du dispositif.

Le moteur 14 centré entre les flasques 10 et 11 permet une meilleure répartition des masses, donc participe à une meilleure stabilité du dispositif, et permet avantageusement de diminuer la longueur de l'arbre moteur 15 tout en assurant une prise sur chaque flasque.

La deuxième poignée 42, sensiblement verticale, permet avantageusement soit une prise pour un portage du dispositif, soit un appui pour le dispositif dans une position redressée à 90° par rapport à celle représentée sur la figure 5.

Les moyens d'accrochage 43 de la gaine 3 permettent avantageusement de maintenir la gaine fermement fixée et d'éviter ainsi son vrillage sur le guide-fil et de manière générale tout mouvement parasite, tout en laissant traverser le tire-fil 4. Les moyens d'accrochage 43 de la gaine sont par exemple constitués d'un orifice de diamètre adapté à celui de la gaine permettant d'engager celle-ci sur quelques millimètres à travers cet orifice. Les moyens d'accrochage 43 de la gaine peuvent présenter plusieurs orifices de diamètres différents pour s'adapter à plusieurs diamètres de gaines ; dans ce cas, les moyens d'accrochage seront avantageusement mobiles pour permettre un alignement de l'orifice approprié utilisé et du guide-fil 8 ou plus exactement guide-tire-fil 8. Il est à noter que lorsqu'on souhaite enrouler la gaine équipée de son ou ses fils, autour du support rotatif, en suivant l'opération de tirage des fils dans la gaine, les moyens d'accrochage 43 de la gaine 3 ne seront pas utilisés, pas plus que le guide-fil 8, lesquels constitueraient un empêchement à l'enroulement de la gaine enchaîné en fin de tirage des fils.

Le professionnel peut utiliser les procédé et dispositif selon l'invention suivant un exemple de gestion ci-dessous décrit:
- estimation des gaines, fils et câbles nécessaires, en longueur et nature, pour une période à venir, par exemple un mois, en fonction des chantiers en cours,
- réalisation de pré-filage et de pré-câblage hors chantier, par exemple à domicile, des gaines, par exemple une fois par mois,
- accès à chaque chantier avec les gaines pré-filées et pré-câblées nécessaires,
- éventuellement, accès au chantier avec la pré-fileuse portative 1, en cas de nécessité ou d'imprévu,
- dans certaines situations nécessitant de tirer du fil ou du câble sur une longue distance de préférence rectiligne et dégagée, par exemple le tirage de câbles de téléphone depuis le relais de l'opérateur téléphonique ou d'électricité, la gaine peut être pré-installée et le/les fils tirés à l'intérieur de celle-ci directement avec la pré-fileuse selon l'invention, sur le chantier.

## Revendications

1. Procédé permettant un passage d'au moins un fil ou câble (2), de type fil électrique ou câble électrique ou analogue, dans une gaine (3) munie d'un tire-fil (4), ***caractérisé en ce qu'***il comprend au moins les étapes suivantes :
- étendre sur le sol la gaine traversée par son tire-fil, en position déroulée,
- attacher une extrémité du tire-fil sur un support rotatif (5) fixe par rapport au sol (20),
- attacher ledit au moins un fil ou câble, à l'autre extrémité du tire-fil,
- maintenir fixe par rapport au sol l'extrémité de la gaine du côté de l'extrémité du tire-fil où est attaché ledit au moins un fil ou câble,
- commander la rotation du support rotatif afin de provoquer l'enroulement du tire-fil sur celui-ci et le passage dudit au moins un fil ou câble dans la gaine.

2. Procédé suivant la revendication 1, ***caractérisé en ce qu'***il comprend en outre au moins l'étape suivante :
- placer le tire-fil dans un guide (8) avant de commander la rotation du support rotatif (5) en vue de provoquer l'enroulement du tire-fil (4) sur le support rotatif.

3. Procédé suivant la revendication 1 ou 2, ***caractérisé en ce qu'***il comprend en outre au moins les étapes suivantes :
- libérer l'extrémité maintenue fixe par rapport au sol (20) de la gaine (3),
- commander la rotation du support rotatif (5) afin de provoquer l'enroulement de la gaine sur celui-ci après que ledit au moins un fil ou câble (2) soit passé dans la gaine,
- retirer la gaine enroulée du support rotatif.

4. Procédé suivant la revendication 3, ***caractérisé en ce qu'***il comprend en outre au moins les étapes suivantes :
- sectionner le tire-fil (4) une fois ledit au moins un fil ou câble (2) passé dans la gaine (3),
- attacher une extrémité de la gaine au support rotatif (5) après que ledit au moins un fil ou câble soit passé dans celle-ci, en vue d'un enroulement de la gaine sur le support rotatif.

5. Procédé suivant l'une quelconque des revendications 1 à 4, ***caractérisé en ce que la*** commande de la rotation du support rotatif (5) est réalisée au moyen d'une commande à distance.

6. Dispositif portatif (1) d'assistance pour le passage d'au moins un fil ou câble (2), de type fil électrique ou câble électrique ou analogue, dans une gaine (3), par exemple une gaine munie d'un tire-fil (4), ***caractérisé en ce qu'**il* comprend :
- un support rotatif (5) sur lequel le tire-fil et la gaine sont aptes à être enroulés,
- un socle portatif (6) soutenant le support rotatif par l'intermédiaire d'une liaison à un degré de liberté en rotation au moins,
- des moyens d'entraînement en rotation (7) du support rotatif.

7. Dispositif selon la revendication 6, ***caractérisé en ce qu'***il comprend en outre des moyens de guidage (8) du tire-fil (4).

8. Dispositif selon la revendication 6 ou 7, ***caractérisé en ce que*** ledit support rotatif comprend :
- un moyeu (9), autour duquel le tire-fil (4) et/ou la gaine (3) sont aptes à être enroulés,
- un premier (10) et un deuxième (11) flasques latéraux, solidaires du moyeu et destinés à permettre un enroulement en couches superposées du tire-fil et/ou de la gaine,
- un (11) au moins desdits premier et deuxième flasques latéraux étant lié au moyeu (9) par une liaison démontable, afin de permettre un retrait du tire-fil et/ou de la gaine enroulés sur le moyeu selon une direction parallèle à l'axe de rotation du support rotatif.

9. Dispositif selon l'une quelconque des revendications 6 à 8, ***caractérisé en ce que*** ledit socle portatif (6) adopte une forme de U, la base du U étant destinée à reposer sur le sol, et les extrémités supérieures (12, 13) des branches du U supportant la liaison à un degré de liberté en rotation avec le support rotatif (5).

10. Dispositif selon l'une quelconque des revendications 6 à 9, ***caractérisé en ce que*** les moyens d'entraînement (7) en rotation du support rotatif (5) comprennent :
- un moteur électrique (14) fixé au socle portatif (6) et comportant un arbre moteur (15),
- des moyens d'entraînement en rotation par friction (16) du support rotatif, liés à l'arbre moteur du moteur électrique.

11. Dispositif selon les revendications 8 et 10, ***caractérisé en ce que*** l'arbre moteur (15) du moteur électrique (14) comporte un axe de rotation parallèle à l'axe de rotation du support rotatif (5), et **en ce que** les moyens d'entraînement en rotation par friction du support rotatif comportent un rouleau (16) en prise par adhérence sur l'un au moins des premier (10) et deuxième (11) flasques latéraux.

12. Dispositif selon la revendication 11, ***caractérisé en ce que*** l'arbre moteur (15) s'étend axialement de part et d'autre du moteur électrique (14) afin que chacune des extensions de l'arbre moteur soit en prise avec un flasque (10, 11) du support rotatif (5).

13. Dispositif selon l'une des revendications 10 à 12, ***caractérisé en ce que*** les moyens d'entraînement en rotation (7) du support rotatif (5) comprennent des moyens de commande à distance du moteur électrique.

14. Dispositif selon l'une quelconque des revendications 6 à 13, ***caractérisé en ce que*** les moyens de guidage (8) du tire-fil (4) comprennent une patte (17) fixée sur le socle portatif (6), comportant une encoche (18) dans laquelle le tire-fil est destiné à passer, ladite encoche étant mobile suivant l'axe de rotation du support rotatif (5).

15. Dispositif selon l'une quelconque des revendications 6 à 14, ***caractérisé en ce qu'***il comporte des moyens de sectionnement du tire-fil (4), aptes à agir lorsque ledit au moins un fil ou câble (2) est passé dans la gaine (3).

16. Dispositif selon la revendication 15, ***caractérisé en ce que*** les moyens de sectionnement du tire-fil (4) sont portés par les moyens de guidage (8) du tire-fil.

17. Dispositif selon l'une quelconque des revendications 6 à 16, ***caractérisé en ce que*** le socle portatif (6) comporte une première poignée (40) s'étendant horizontalement et servant également d'appui au sol dudit socle.

18. Dispositif selon la revendications 17, ***caractérisé en ce qu'***il comprend deux roues ou roulettes (41) disposées sur le socle portatif (6), du côté opposé à la première poignée (40).

19. Dispositif selon l'une quelconque des revendications 6 à 18, ***caractérisé en ce qu***'il comprend des moyens d'accrochage (43) de la gaine disposés sur ledit socle portatif (6).
